# EUROPÄISCHE PATENTANMELDUNG

(11) **EP 0 534 077 A1**
(43) Veröffentlichungstag der Anmeldung: **31.03.1993**
(21) Anmeldenummer: 92112367.5
(22) Anmeldetag: 20.07.1992
(51) Int. Cl.: B65G 45/22, D01H 11/00, D01H 9/18

(54) **Transporteinrichtung**

(30) Priorität: 21.09.1991 DE 4131479
(71) Anmelder: ERNST JACOBI GmbH, D-86368 Gersthofen (DE)
(72) Erfinder: Steinike, Ulrich, W-8900 Augsburg (DE); Junger, Reiner, W-8904 Friedberg (DE)
(74) Vertreter: Charrier, Rolf, Dipl.-Ing.

(57) **Zusammenfassung**

Die Erfindung geht aus von einer Transporteinrichtung (1-7) für die Textil- und Bekleidungsindustrie. Bei einer solchen Transporteinrichtung (1-7) sind Transportwägen (10) längs eines Schienensystems (3) verfahrbar und nehmen zueinander im wesentlichen gleichartige Güter (8) auf, beispielsweise Garnspulen (8) oder konfektionierte Kleidungsstücke. Da in der Textilindustrie die Luft meist mit Flusen angereichert ist, verschmutzen die Führungsschienen (1-3), die Transportwägen (10) und die Garnspulen (8) relativ schnell und müssen daher in regelmäßigen Abständen abgeblasen oder abgesaugt werden. Dies geschieht manuell und ist zeitraubend und teuer.

Die Erfindung beschreibt einen Wanderreiniger (9), der längs des Schienensystems (1-3) verfahrbar (4,5) ist und einen Luftstrom (12,16) erzeugt, der im wesentlichen auf die Schienen (1-3) gerichtet ist. Dieser Luftstrom (12,16) kann ein Saugluftstrom oder ein Blasluftstrom sein. Der Querschnitt des Wanderreinigers (9) darf den maximalen Querschnitt der Güter (8) nicht überschreiten. Der Wanderreiniger (9) kann an einem Transportwagen (6) lösbar oder fest angeordnet sein. Der Luftstrom (12,16) kann durch einen elektromotorisch betriebenen Ventilator (15), einen durch ein Reibradgetriebe (26-31) betriebenen Ventilator (18) oder durch Druckluft erzeugt werden.

## Beschreibung

Die Erfindung betrifft eine Transporteinrichtung nach dem Oberbegriff des Anspruchs 1.

Die Erfindung ist überall verwendbar, wo verschmutzungsempfindliche Waren hängend mit Transporteinrichtungen längs eines Schienensystems befördert werden. Insbesondere ist die Erfindung in der Textil- und Bekleidungsindustrie anwendbar, hier vor allemin der Spinnerei, jedoch auch im Konfektionier- und Auffrischbetrieb.

Bei der Befördung textiler Waren an Schienensystemen tritt häufig das Problem auf, daß diese Waren, entweder durch umherfliegende Flusen oder durch Abriebstaub des Transportsystems, verschmutzt werden. Dieses Problem tritt in praktisch allen Stadien der Textilherstellung auf wobei im folgenden jedoch nur der Spinnereibetrieb beschrieben werden soll.

Die wichtigsten Verarbeitungsstationen im Spinnereibetrieb sind, in dieser Reihenfolge des Produktionsablaufs, der Flyer, die Ringspinnmaschine und die Spulmaschine, wobei jede dieser Maschinen oft vielfach vorhanden ist. Der Flyer, welcher der Ringspinnmaschine vorgeschaltet ist, verzieht die meist dubliert aus den Luntenkannen ablaufenden Bänder auf einem Nadelwalzen- Streckwerk, verdreht diese anschließend und wickelt sie schließlich kontinuierlich auf Spulen. Diese Garnspulen werden den Ringspinnmaschinen zugeführt, wo das Garn versponnen wird. Das gesponnene Garn wird anschließend durch die Spulmaschinen aufgespult.

Der Transport der Spulen zwischen Flyer, Ringspinnmaschinen und Spulmaschinen geschieht mittels eines Transportsystems, das an einen Rangierbahnhof erinnert. Jeweils einige Garnspulen werden an Transportwägen, sogenannten Trolleys, zusammengefaßt, wobei jeder Trolley beispielsweise vier bis fünf, manchmal bis zu zwölf, Garnspulen aufnimmt. Die Befestigung der Garnspulen an den Trolleys erfolgt mittels Schnellverschlüssen, oft werden sogenannte Casablanca-Haken verwendet. Diese sind an den Trolleys an Verbindungsstangen befestigt, an deren Oberseite wiederum ein Gestell mit mehreren Radpaaren angeordnet ist. Diese Radpaare laufen auf oder in Führungsschienen, wobei diese Führungsschienen das verzweigte Transportsystem bilden. An dieses Transportsystem können sämtliche Verarbeitungsstationen in der Spinnerei angeschlossen sein. Zwischen dem Flyer und den Ringspinnmaschinen befinden sich oft mehrere Pufferzonen, in denen die bestückten Trolleys zum Einlauf in die Ringspinnmaschine bereit gehalten werden.

Die Trolleys werden üblicherweise durch Reibräder, welche in regelmäßigen Abständen am Schienensystem angeordnet sind, angetrieben. Diese Antriebsart wird im Ausführungsbeispiel näher erläutert. Die Trolleys können jedoch auch einen eigenen Antrieb aufweisen, vorzugsweise einen elektromotorisch betriebenen Triebkopf. Dieser Triebkopf erhält seine elektrische Energie entweder aus mitgeführten Akkumulatoren oder über ein Stromschienensystem, welches gemeinsam mit dem Führungsschienensystem verläuft. Die Transporteinrichtung kann ferner eine Mischform beider Antriebsarten aufweisen, wobei beispielsweise im Bereich der Maschinen der passive Antrieb erfolgt und auf längeren Strecken zwischen den Maschinen, wo kein Stromschienensystem vorhanden ist, auf aktiven Antrieb umgeschaltet wird.

Da in der Textilindustrie die Luft meistens mit Flusen angereichert ist und der Lauf der Führungsrollen in den Führungsschienen des Transportsystems Abrieb verursacht, verschmutzen die Führungsschienen, die Trolleys und auch die daran befestigten Garnrollen relativ schnell. Es ist daher erforderlich, sämtliche Teile in regelmäßigen Abständen mit Druckluft abzublasen oder abzusaugen. Dies ist bislang ein manuelles Verfahren. Es dauert sehr lange, ist wegen der beengten Verhältnisse sehr umständlich und damit teuer. Außerdem findet auch bei regelmäßiger Absaugung eine Verschmutzung der genannten Teile statt, was das gesponnene Produkt in seiner Qualität beeinträchtigen kann.

Es stellt sich daher die Aufgabe, die Transporteinrichtung so weiterzubilden, daß eine nahezu automatisierte und in kurzen Abständen durchführbare Reinigung der gesamten Anlage möglich wird.

Gelöst wird diese Aufgabe durch die kennzeichnenden Merkmale des Anspruchs 1. Vorteilhafte Ausgestaltungen sind den Unteransprüchen entnehmbar.

Einige Ausführungsbeispiele der Erfindung sollen im folgenden unter Bezugnahme auf die Zeichnungen erläutert werden. Dabei zeigen:
- **Fig. 1**: einen Ausschnitt der Transporteinrichtung mit zwei aufgehängten Garnspulen und einem Wanderreiniger;
- **Fig. 2**: eine Seitenansicht der Figur 1;
- **Fig. 3**: eine alternative Ausführungsform der in Figur 2 dargestellten Transporteinrichtung;
- **Fig. 4**: eine teilweise im Schnitt dargestellte Seitenansicht einer Ausführungsform des Wanderreinigers;
- **Fig. 5**: eine teilweise im Schnitt dargestellte Seitenansicht einer anderen Ausführungsform des Wanderreinigers;
- **Fig. 6**: eine Seitenansicht einer weiteren Ausführungsform des Wanderreinigers;
- **Fig. 7**: eine teilweise im Schnitt dargestellte Seitenansicht einer weiteren Ausführungsform des Wanderreinigers;
- **Fig. 8**: eine Übersicht über ein Transportsystem in einer Spinnerei.

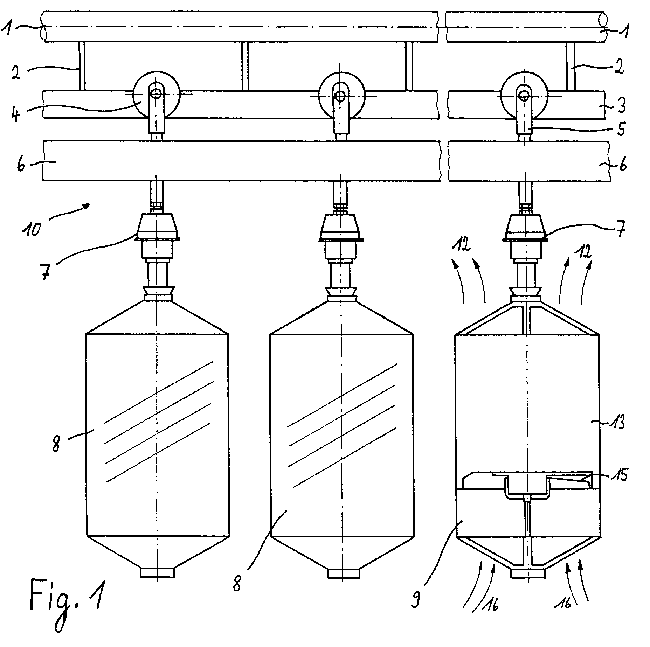

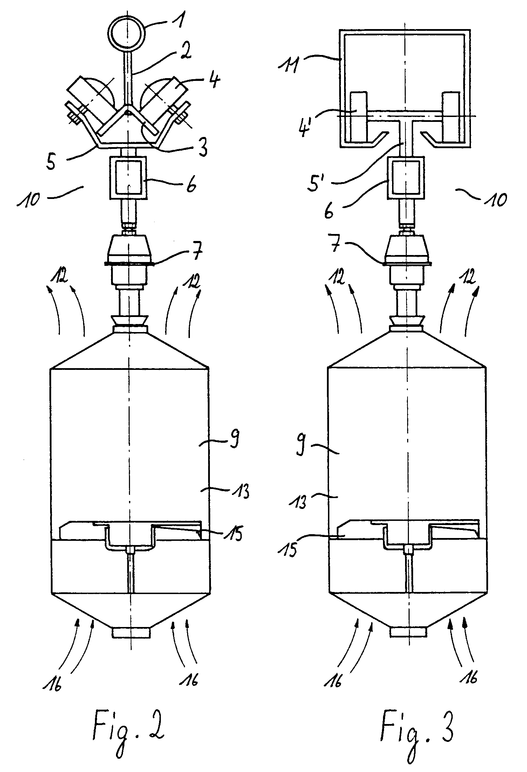

Der in den Figuren 1 und 2 dargestellte Ausschnitt eines Schienensystems besteht aus einer Tragschiene 1, Haltestangen 2 und einer L-förmigen, nach unten offenen, Führungsschiene 3. Aufden nach oben weisenden Seiten der L-förmigen Führungsschiene 3 laufen paarweise angeordnete Räder 4. Die Achsen dieser Räder 4 sind an Tragegestellen 5 befestigt, welche nach unten in eine, der Tragschiene 1 parallele, Verbindungsstange 6 münden. An einer Verbindungsstange 6 können mehrere Tragegestelle 5 mit den dazugehörigen Radpaaren 4 angeordnet sein. An ihrer Unterseite weist die Verbindungsstange 6 Schnellverschlüsse 7 auf, diese, oft auch als Casablanca-Haken bezeichneten, Schnellverschlüsse 7 dienen der Aufnahme der Garnspulen 8 bzw. im vorliegenden Fall auch des Wanderreinigers 9.

Die gesamte Anordnung aus Rädern 4, Tragegestell 5, Verbindungsstange 6 und Schnellverschlüssen 7 bildet einen Transportwagen oder Trolley 10. Der Transportwagen 10 weist keinen eigenen Antrieb auf, sondern wird durch, in regelmäßigen Abständen an der Tragschiene 1 angebrachte, Reibräder (nicht dargestellt), welche auf die Verbindungsstange 6 wirken, angetrieben. Die Länge der Verbindungsstange 6 muß also mindestens so groß sein wie der Abstand zwischen diesen antreibenden Reibrädern. Die maximale Länge der Verbindungsstange 6 wird bestimmt durch den engsten Krümmungsradius der Tragschiene 1 in Kurven. Üblicherweise ist die Länge so bemessen, daß vier bis sechs Garnspulen 8 aufgenommen werden können.

Figur 3 zeigt ein anderes, jedoch prinzipiell ähnliches, Transportsystem. Bei diesem Transportsystem sind die Tragschiene 1, die Haltestangen 2 und die Führungsschiene 3 desin Figur 2 dargestellten Transportsystems ersetzt durch eine, nach unten offene, T-förmige Führungsschiene 11. Das Tragegestell 5' ist in diesem Falle T-förmig und die Räder 4' laufen auf den Innenflächen der geöffneten Seite der T-förmigen Führungsschiene 11. Das Tragegestell 5' mündet ebenfalls in eine Verbindungsstange 6. Der Antrieb und die sonstigen Eigenschaften entsprechen dem in den Figuren 1 und 2 dargestellten Ausführungsbeispiel.

In einen der oben beschriebenen Trolleys 10 ist nun anstelle einer Garnspule 8 ein Wanderreiniger 9 eingesetzt. Der Wanderreiniger 9 ist damit längs des Schienensystems, so wie die Garnspulen 8, verfahrbar. Er kann, zusammen mit Garnspulen 8, an einem gemeinsamen Trolley 10 angeordnet oder an einem separaten Trolley 10 befestigt sein. Sein Querschnitt darf, in Transportrichtung gesehen, den Querschnitt der Garnrollen 8 nicht überschreiten. Dadurch ist der Wanderreiniger 9 auch in vorhandenen Schienensystemen einsetzbar, bei denen parallele Tragschienen 1 oft einen sehr geringen Abstand zueinander aufweisen. Der Wanderreiniger 9 erzeugt einen Blasluftstrom 12, der im wesentlichen auf die Schienen, also die Tragschiene 1 oder die Führungsschiene 3, gerichtet ist. Durch dieses Anblasen werden die Tragschiene 1, die Haltestangen 2, die Führungsschiene 3, die Räder 4, 4', das Tragegestell 5, 5', die Verbindungsstange 6 und die Schnellverschlüsse 7 von Verunreinigungen gesäubert. Diese fallen im wesentlichen zu Boden, wo sie bei der regelmäßigen Reinigung entfernt werden.

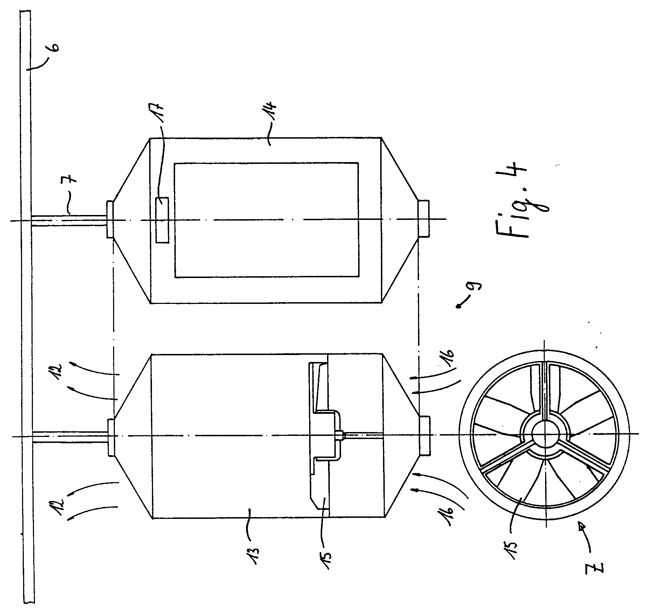

Figur 4 zeigt ein erstes Ausführungsbeispiel des Wanderreinigers 9, bei dem der Blasluftstrom 12 mittels eines elektrisch angetriebenen Ventilators 15 erzeugt wird. Der Wanderreiniger 9 ist hier in zwei Gehäusen 13 und 14 untergebracht. Jedes dieser Gehäuse wird über einen Schnellverschluß 7 an der Verbindungsstange 6 befestigt. Das erste Gehäuse 13 beinhaltet einen Ventilator 15, der in der darunter dargestellten Einzelheit Z in Draufsicht dargestellt ist. Der Ventilator 15 wird angetrieben von einem (nicht dargestellten) Gleichstrommotor, welcher ebenfalls im Gehäuse 13 untergebracht ist. Vorzugsweise weist dieser Gleichstrommotor eine gemeinsame Achse mit dem Ventilator 15 auf. Die zur Energieversorgung des Gleichstrommotors notwendigen Akkumulatoren befinden sich im zweiten Gehäuse 14. Zwischen den beiden Gehäusen 13 und 14 verlaufen (nicht dargestellte) elektrische Verbindungen zur Versorgung des Gleichstrommotors durch die Akkumulatoren. In der Draufsicht Z erkennt man, daß das durch den Ventilator 15 gebildete Gebläse ein Axialgebläse ist. Der Ventilator 15 saugt dabei durch Öffnungen an der Unterseite des Gehäuses 13 Luft ein (Bezugszahl 16) und bläst diese Luft durch Öffnungen an der Oberseite des Gehäuses in Formeines Blasluftstroms 12 in Richtung der Schienen 1 und 3. Die Öffnungen an der Oberseite des Gehäuses sind vorzugsweise verstellbare Düsen. Die Akkumulatoren im zweiten Gehäuse 14 müssen in regelmäßigen Abständen nachgeladen werden. Dies geschieht beispielsweise an einer längs der Schienen vorgesehenen Andockstation 23, an der der Wanderreiniger 9 andockt. Zur elektrischen Verbindung der Akkumulatoren mit dem Ladegerät sind auf der Oberfläche des zweiten Gehäuses 14 Schleifkontakte 17 vorgesehen.

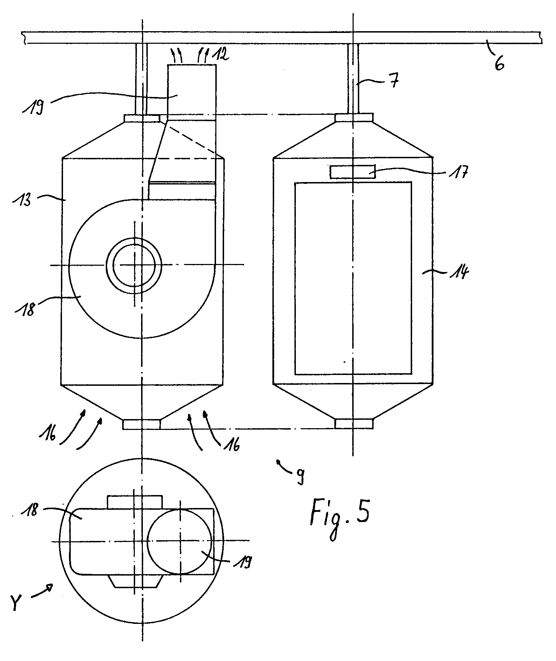

In Figur 5 ist eine alternative Ausführungsform des Wanderreinigers 9 dargestellt. Diese Ausführungsform entspricht in Aufbau und Funktion dem in Figur 4 beschriebenen Wanderreiniger 9, arbeitet jedoch anstatt mit einem Axialgebläse mit einem Radialgebläse 18. Das Radialgebläse 18 weist an der Oberseite des ersten Gehäuses 13 eine rohrförmige Verlängerung 19 auf, an deren Oberseite die Luftaustrittsöffnungen angebracht sind. Die Einzelheit Y zeigt einen Querschnitt durch das erste Gehäuse 13.

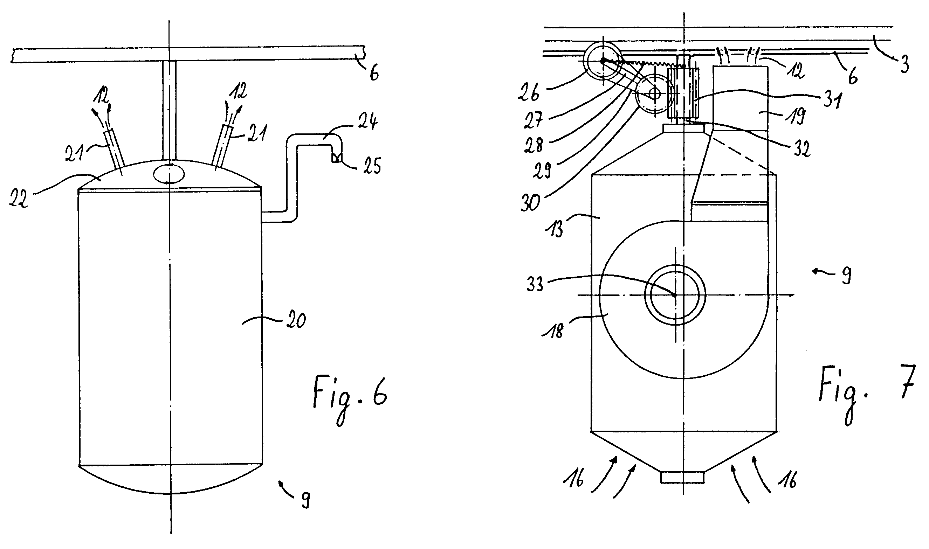

Das in Figur 6 dargestellte Ausführungsbeispiel arbeitet nicht mit elektrischer Energie, sondern mit Luftdruck. Es besteht lediglich aus einem Gehäuse 20, dessen Querschnitt ebenfalls den vorgenannten Bedingungen genügen muß und daß als Druckgehäuse ausgebildet ist. Dieses Gehäuse 20 weist an seiner dem Schienensystem zugewandten Oberseite 22 mehrere Luftaustrittsöffnungen 21 auf, welche als enge Düsen ausgebildet sind und durch welche der in dem Gehäuse 20 herrschende Überdruck austreten kann. Dabei wird ein Blasluftstrom 12 erzeugt. Üblicherweise wird mit einem Überdruck im Bereich von 5 bis 10 bar gearbeitet. Auch in dieser Ausführungsform wird der Wanderreiniger 9 an einer Andockstation 23 in regelmäßigen Abständen mit Energie versorgt. In diesem Fall wird ein Luftzuleitungsrohr 24 mit einem endständigen Ventil 25 in Verbindung mit einer Druckluftkammer gebracht. Die Wirkungsweise dieses Wanderreinigers 9 entspricht ansonsten den bereits besprochenen Ausführungsformen.

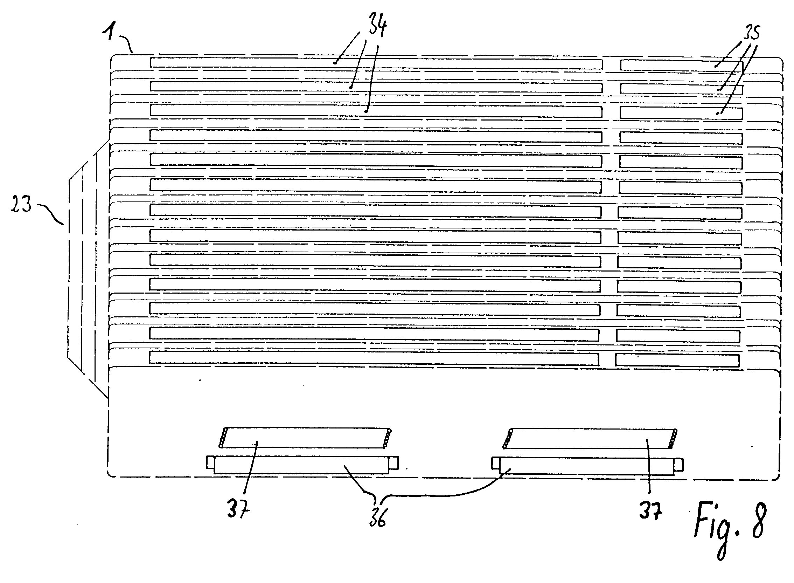

Neben einem Elektro- oder Druckluftantrieb ist auch ein Antrieb des Gebläses über die Relativbewegung des Wanderreinigers 9 gegenüber der Tragschiene 1 möglich. Dies ist in Figur 7 dargestellt. Der Wanderreiniger 9 besteht hier wiederum aus einem Gehäuse 13, welches ein Radialgebläse 18 beinhaltet, wie es bereits bei der in Figur 5 dargestellten Ausführungsform besprochen wurde. Der Antrieb dieses Radialgebläses 18 erfolgt jedoch hier nicht elektrisch, sondern mechanisch. Dazu ist an einem Ausleger 27 des Gehäuses 13 ein Reibrad 26 befestigt, welches mittels einer Feder 28 gegen die Tragschiene 1 gepreßt wird. Dieses Reibrad 26 ist durch einen Zahnriemen 29 mit einer Schneckenwelle 30 verbunden. Die Schneckenwelle 30 ist in Eingriff mit einem Zahnrad 31, welches wiederum fest auf einer Achse 32 sitzt. Diese Achse weist in das Innere des Gehäuses 13 und steht dort über ein Paar (nicht dargestellter) Kegelräder in Verbindung mit der zu ihr senkrechten Lüfterachse 33.

Beim Transport des Wanderreinigers 9 bewegt sich das Gehäuse 13 und die an ihm angeordneten Bauteile 26, 27, 28, 29 und 30 relativ zur Tragschiene 1. Das Reibrad 26 rollt aufder Tragschiene 1 ab und treibt über den Zahnriemen 29 die Schneckenwelle 30 an. Diese Schneckenwelle 30 treibt, in starker Übersetzung, das Zahnrad 31 an. Dadurch dreht sich auch die Achse 32 und über das (nicht dargestellte) Kegelradpaar wird die Achse 33 in Drehung versetzt. Die Lüfterdrehzahl ist also proportional zur Bewegungsgeschwindigkeit des Wanderreinigers 9 gegenüber der Tragschiene 1.

In Figur 8 ist schematisch der Plan eines Transportsystems in einer Spinnerei dargestellt. Die gestrichelten Linien stellen dabei die Tragschienen 1 dar, eine Vielzahl von Ringspinnmaschinen ist mit der Bezugszahl 34 gekennzeichnet, die zugehörigen Spulmaschinen mit der Bezugszahl 35. In die Pufferzone 23 ist auch die Andockstation für die Versorgung der Wanderreiniger 9 mit elektrischer Energie eingebaut. In dieser Pufferzone 23 warten die bestückten Trolleys 10 auf ihre Zuführung zu den Ringspinnmaschinen 34. Die Flyer sind in dieser Zeichnung durch die Bezugszahl 36, die Luntenkannen durch die Bezugszahl 37 gekennzeichnet. Alle Ausführungsformen der Wanderreiniger 9 können einen eigenen Trolley 10 besitzen oder zusammen mit den Garnspulen 8 an einen Trolley 10 angeordnet sein. Dieser eigene Trolley kann auch von einem Trolley, welcher Garnspulen 8 trägt, mitgenommen werden.

Eine weitere, in den Figuren nicht dargestellte, Ausführungsform des Wanderreinigers 9 verwendet anstelle eines Blasluftstroms 12 einen Saugluftstrom. Dieser Saugluftstrom ist ebenfalls auf das Schienensystem gerichtet und dient der direkten Absaugung von Verunreinigungen, welche dann entweder an der Unterseite des Gehäuses 13 des Wanderreinigers 9 in Richtung zum Boden ausgeblasen werden oder in einem in das Gehäuse 13 eingebauten Filter festgehalten werden. Der Ventilatorantrieb kann auf eine der bereits besprochenen Arten erfolgen.

Es ist ferner möglich, einen Wanderreiniger 9 mit einem Blas- und mit einem Saugluftstrom arbeiten zu lassen. In einer bevorzugten Ausführungsform steht dabei eine Blasdüse aus der Oberseite des Gehäuses 13 hervor und erzeugt einen im wesentlichen horizontalen auf das Schienensystem gerichteten Blasluftstrom. Ebenfalls aus der Oberseite des Gehäuses 13 steht ein Saugkanal hervor, der einen im wesentlichen horizontalen und zur Schiene hin weisenden Saugluftstrom erzeugt. Dabei löst der Blasluftstrom die Verunreinigungen vom Schienensystem, worauf diese dann vom Saugluftstrom erfaßt und eingesaugt werden. Der Saugluftstrom wird entweder wieder an der Unterseite des Gehäuses 13 ausgeblasen oder durch ein im Gehäuse 13 eingebautes Filter gefiltert.

Neben der beschriebenen Verwendung in einem Spinnereibetrieb läßt sich die erfindungsgemäße Transporteinrichtung bei allen anderen, ähnlich aufgebauten Transportsystemen einsetzen. In der Textilindustrie bietet sich beispielsweise die Verwendung im Hochregallager eines Konfektionier- oder Auffrischbetriebs an. Anstelle der Garnspulen 8 werden dort Kleidungsstücke transportiert, die bisher zum Schutz vor Verschmutzung mit Plastikfolien abgedeckt werden mußten. Eine regelmäßige Reinigung mit dem Wanderreiniger 9 der vorliegenden Erfindung würde deren Verwendung unnötig machen und so auch den Kunststoffabfall erheblich reduzieren.

## Patentansprüche

1. Transporteinrichtung für die Textil- und Bekleidungsindustrie, bei der Transportwagen längs eines Schienensystems verfahrbar sind und die Transportwagen im wesentlichen zueinander gleichartige Güter aufnehmen, die quer zur Fahrtrichtung der Transportwagen gesehen einen maximalen Querschnitt aufweisen, **dadurch gekennzeichnet**, daß längs des Schienensystems ein Wanderreiniger (9) verfahrbar ist, der mindestens einen Luftstrom (12) erzeugt, der im wesentlichen auf die Schienen (1,3) gerichtet ist und dieser Wanderreiniger (9) quer zur Fahrtrichtung gesehen einen Querschnitt aufweist, der den maximalen Querschnitt der Güter (8) nicht überschreitet.

2. Transporteinrichtung nach Anspruch 1, **dadurch gekennzeichnet**, daß der Wanderreiniger (9) an einem Transportwagen (10) angeordnet ist.

3. Transporteinrichtung nach Anspruch 1, **dadurch gekennzeichnet**, daß der Wanderreiniger (9) an einem eigenen Transportwagen (10) angeordnet ist.

4. Transporteinrichtung nach Anspruch 3, **dadurch gekennzeichnet**, daß der eigene Transportwagen (10) von einem Transportwagen (10) für die Güter (8) mitgenommen wird.

5. Transporteinrichtung nach Anspruch 4, **dadurch gekennzeichnet**, daß die Verbindung zwischen den Transportwagen (10) lösbar ist.

6. Transporteinrichtung nach Anspruch 1, **dadurch gekennzeichnet**, daß der Wanderreiniger (9) an einem Triebkopf der Transporteinrichtung angeordnet ist.

7. Transporteinrichtung nach einem der voranstehenden Ansprüche, **dadurch gekennzeichnet**, daß der Wanderreiniger (9) einen elektromotorisch betriebenen Ventilator (15,18) und mindestens einen den Elektromotor speisenden Akkumulator aufweist.

8. Transporteinrichtung nach Anspruch 7, **dadurch gekennzeichnet**, daß der Akkumulator durch Schleifkontakte (17) nachgeladen wird.

9. Transporteinrichtung nach einem der Ansprüche 1 bis 6, **dadurch gekennzeichnet**, daß der Wanderreiniger (9) mindestens einen Druckbehälter (20) für Druckluft aufweist.

10. Transporteinrichtung nach einem der Ansprüche 7 bis 9, **dadurch gekennzeichnet**, daß längs der Schienen (1,3) mindestens eine Andockstation (23) vorgesehen ist, an der der Wanderreiniger (9) andockt und die ihn mit Energie zur Erzeugung der Blasluft (12) versorgt.

11. Transporteinrichtung nach einem der Ansprüche 1 bis 6, **dadurch gekennzeichnet**, daß der Wanderreiniger (9) einen mechanisch betriebenen Ventilator (15,18) aufweist und dieser Ventilator (15,18) über die Vorschubbewegung seines Transportwagens (10) angetrieben wird.

12. Transporteinrichtung nach Anspruch 11, **dadurch gekennzeichnet**, daß der Antrieb über ein mit der Schiene (3) in Eingriff stehendes Reibradgetriebe erfolgt.

13. Transporteinrichtung nach einem der Ansprüche 1 bis 6, **dadurch gekennzeichnet**, daß der Wanderreiniger (9) einen elektromotorisch betriebenen Ventilator (15,18) aufweist, der durch ein Stromschienensystem mit Energie versorgt wird.

14. Transporteinrichtung nach einem der Ansprüche 1 bis 13, **dadurch gekennzeichnet**, daß der Luftstrom ein Blasluftstrom (12) ist.

15. Transporteinrichtung nach einem der Ansprüche 1 bis 13, **dadurch gekennzeichnet**, daß der Luftstrom ein Saugluftstrom ist.

16. Transporteinrichtung nach Anspruch 15, **dadurch gekennzeichnet**, daß zusätzlich ein Blasluftstrom (12) vorhanden ist, der im wesentlichen auf die Schienen (1,3) gerichtet ist.

17. Transporteinrichtung nach Anspruch 16, **dadurch gekennzeichnet**, daß die Hauptströmungsrichtung des Blasluftstroms im wesentlichen mit der Hauptströmungsrichtung des Saugluftstroms übereinstimmt.

18. Transporteinrichtung nach einem der Ansprüche 15 bis 17, **dadurch gekennzeichnet**, daß die eingesaugte Luft im Wanderreiniger (9) gefiltert und wieder ausgeblasen wird.
